# EUROPEAN PATENT APPLICATION

(11) **EP 1 122 743 A1**
(43) Date of publication of application: **08.08.2001**
(21) Application number: 00300715.0
(22) Date of filing: 31.01.2000
(51) Int. Cl.: G21C 9/004

(54) **Systems and methods for maintaining integrity of a primary containment vessel in a nuclear reactor**

(71) Applicant: GENERAL ELECTRIC COMPANY, Schenectady, NY 12345 (US)
(72) Inventor: Aburomia, Momtaz Mahdi, Palo Alto, California 94301 (US); Barbanti, Giancarlo, 22060 Sirtori (IT); Solorzano, Enrique Rafael, San Jose, California 95118 (US); Sawyer, Craig Delaney, Los Gatos, California 95032 (US)
(74) Representative: Pedder, James Cuthbert

(57) **Abstract**

Ventilating systems (26) and methods for retaining steam leakage from a primary containment vessel (16) in a nuclear reactor (10). In accordance with one embodiment, the ventilating system (26) is coupled to the primary containment vessel (16) of the nuclear reactor (10) to transport steam from the primary containment vessel (16) to a secondary containment vessel (24). The ventilating system (26) includes a ventilating pipe (28) having a safety relief valve (30) coupled thereto. The ventilating pipe (28) extends between the primary containment vessel (16) and the secondary containment vessel (24). The safety relief valve (30) is configured to move between a first, open position, where the safety relief valve (30) prevents steam from flowing through the ventilating pipe (28), and a second, closed position, where the safety relief valve (30) enables steam to flow through the ventilating pipe (28). If pressure within the primary containment vessel (16) exceeds a first pressure set point of the safety relief valve (30), the safety relief valve (30) moves to the open position to enable steam to discharge from the primary containment vessel (16) to the secondary containment vessel (24), and thus reduce the pressure within the primary containment vessel (16). When the pressure in the primary containment vessel (16) reduces to a second, lower pressure set point, the safety relief valve (30) moves from the open position to the closed position.

## Description

This invention relates generally to nuclear reactors and, more particularly, to systems and methods for maintaining the integrity of primary containment vessels of such reactors.

One known boiling water nuclear reactor includes a reactor pressure vessel, a primary containment vessel, and a secondary containment vessel. The primary containment vessel and the secondary containment vessel surround the reactor pressure vessel and are designed to withstand pressure generated by the reactor pressure vessel during reactor accident conditions. Particularly, the reactor pressure vessel is positioned within the primary containment vessel, which is designed to contain pressure resulting from a Loss-Of-Coolant Accident (LOCA), and the secondary containment vessel surrounds the primary containment vessel and facilitates containing such pressure.

During reactor accident conditions, it is possible that the primary containment vessel pressure may exceed the primary containment pressure capability. For example, during the theoretical case of a severe accident, e.g., high pressure core melt or steam explosion outside the reactor pressure vessel, the pressure generated within the primary containment vessel might possibly exceed the capability of the vessel. Until now, it was believed to be necessary to vent the primary containment vessel to the atmosphere to maintain the primary containment integrity, which is undesirable.

It would be desirable to provide a system for maintaining primary containment vessel integrity without venting the primary containment vessel to the atmosphere. It also would be desirable for such system to be simple to install in existing nuclear reactors.

According to one embodiment of the invention a ventilating system includes a ventilating pipe having a safety relief valve (SRV) for venting the primary containment vessel (PCV) into the secondary containment vessel (SCV). The ventilating pipe extends between the PCV and the SCV and the SRV is configured to move between a first position, where the SRV prevents steam from flowing through the ventilating pipe between the PCV and the SCV, and a second position, where the SRV enables steam to flow through the ventilating pipe between the PCV and the SCV.

During reactor operation, and if a serious accident occurs, the reactor pressure vessel (RPV) generates pressure within the PCV. When the pressure within the PCV exceeds a first SRV pressure set point, the SRV moves to the second position so that steam within the PCV will discharge through the SRV and into the SCV. As the steam exits the PCV, the pressure within the PCV drops. When the pressure within the PCV drops below a second, lower SRV pressure set point, the SRV moves to the first position to reseal the PCV.

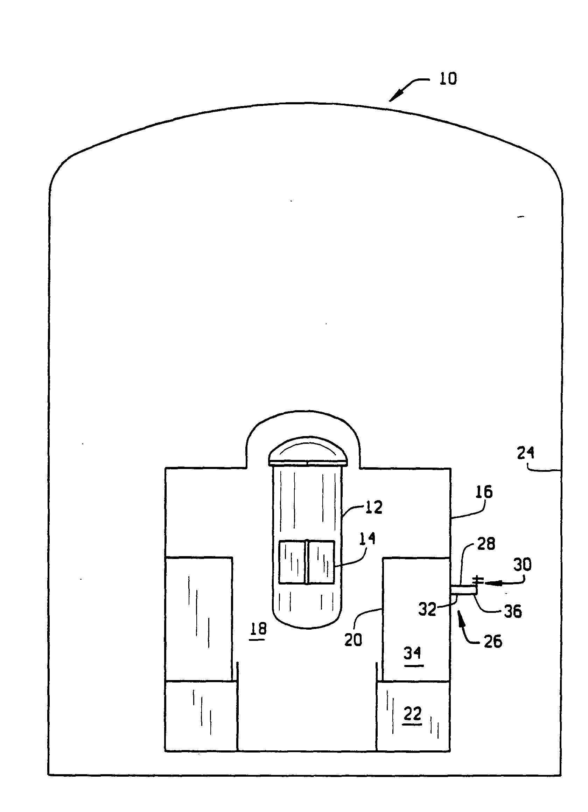

The invention will now be described in greater detail, by way of example, with reference to the drawing, the single figure of which is a schematic illustration of a boiling water reactor in accordance with one embodiment of the present invention.

The drawing is a schematic illustration of a boiling water reactor 10 in accordance with one embodiment of the present invention. Boiling water reactor 10 includes a reactor pressure vessel (RPV) 12 having a core 14 positioned therein. RPV 12 is positioned in a primary containment vessel (PCV) 16 having a drywell 18 and a wetwell 20. Wetwell 20 includes a suppression pool of water 22 and is substantially separated from drywell 18. PCV 16 is configured with a PCV pressure capability designed to contain pressure resulting from a Loss-Of-Coolant Accident (LOCA). A secondary containment vessel (SCV) 24 surrounds PCV 16 and cooperates with PCV 16 to contain such pressure resulting from a LOCA.

Reactor 10 further includes a PCV ventilating system 26 having several ventilating pipes 28 and several safety relief valves (SRVs) 30 (only one ventilating pipe 28 and one SRV 30 are shown in the drawing). Each ventilating pipe 28 extends between PCV 16 and SCV 24. Particularly, each ventilating pipe 28 includes a first end 32 communicatively coupled to an air space 34 in wetwell 20 above suppression pool 22 and a second end 36 extending into SCV 24. First end 32 is located in wetwell above suppression pool 22 to allow for scrubbing of the products before any discharge to the SCV. Second end 36 of each ventilating pipe 28 includes one SRV 30 which is configured to move between a first, closed position, where SRV 30 prevents steam from flowing through ventilating pipe 28 between PCV 16 and SCV 24, and a second, open position, where SRV 30 enables steam to flow through ventilating pipe 28 between PCV 16 and SCV 24. During reactor operation, and if a serious accident occurs, RPV 12 and core 14 generate a high pressure or a high temperature within PCV 16. When the pressure within PCV 16 exceeds the first SRV pressure set point, SRV 30 moves from the closed position to the open position so that steam within the PCV 16 will discharge, or spill-over, through ventilating pipe 28 and SRV 30 into SCV 24. In such a case, PCV 16 retains most of the accident inventory, and only the spill-over after being scrubbed in the suppression pool, is directed to SCV 24 where it is retained. As the spill-over exits PCV 16, the pressure within PCV 16 drops. When the pressure within PCV 16 drops below the second, lower SRV pressure set point, SRV 30 moves from the open position to the closed position to reseal PCV 16 so that spill-over from PCV 16 is stopped from entering SCV 24. SRV 30 allows PCV 16 to remain at full capacity status after a serious accident has occurred.

The SRV pressure set point is preselected as a pressure lower than the PCV capability to facilitate maintaining the environmental conditions within PCV 16 below its design limits. The SRV pressure set point may, for example, be stored in a computer (not shown) or microchip (not shown) or it could be a simple mechanical device such as a spring that is coupled to SRV 30. SRV 30 may close, for example, when the PCV pressure reduces by approximately 5%. To facilitate retaining PCV spill-over, SCV 24 is configured as a pressure vessel having, for example, between 5 and 15 psig pressure capability. In addition, SCV 24 is configured to retain PCV spill-over without exceeding its pressure capability.

The above described ventilating system maintains PCV integrity without venting the PCV to the atmosphere. Such ventilating system also is simple to implement in existing nuclear reactors.

## Claims

1. A ventilating system (26) for a nuclear reactor (10), the nuclear reactor (10) including a primary containment vessel (16) positioned in a secondary containment vessel (24), said ventilating system (26) comprising:
at least one ventilating pipe (28); and
at least one safety relief valve (30) coupled to said at least one ventilating pipe (28), said at least one ventilating pipe (28) configured to extend between the primary containment vessel (16) and the secondary containment vessel (24), said at least one safety relief valve (30) configured to move between a first position, where said safety relief valve (30) prevents steam from flowing through said at least one ventilating pipe (28), and a second position, where said safety relief valve (30) enables steam to flow through said at least one ventilating pipe (28).

2. A ventilating system (26) in accordance with Claim 1 comprising one ventilating pipe (28) and one safety relief valve (30), said one safety relief valve (30) coupled to said one ventilating pipe (28).

3. A ventilating system (26) in accordance with Claim 1 comprising at least two ventilating pipes (28), each said ventilating pipe (28) including one safety relief valve (30) coupled thereto.

4. A ventilating system (26) in accordance with Claim 1 wherein the primary containment vessel (16) includes a wetwell (20), and wherein said at least one ventilating pipe (28) is communicatively coupled to the wetwell (20).

5. A ventilating system (26) in accordance with Claim 1 wherein said at least one safety relief valve (30) comprises at least one pressure set point.

6. A nuclear reactor (10) comprising:
a primary containment vessel (16);
a secondary containment vessel (24) surrounding said primary containment vessel (16); and
a ventilating system (26) configured to transport steam between said primary containment vessel (16) and said secondary containment vessel (24).

7. A nuclear reactor (10) in accordance with Claim 6 wherein said ventilating system (26) comprises:
at least one ventilating pipe (28); and
at least one safety relief valve (30) coupled to said at least one ventilating pipe (28), said at least one ventilating pipe (28) extending between said primary containment vessel (16) and said secondary containment vessel (24), said at least one safety relief valve (30) configured to move between a first position, where said safety relief valve (30) prevents steam from flowing through said at least one ventilating pipe (28), and a second position, where said safety relief valve (30) enables steam to flow through said at least one ventilating pipe (28).

8. A nuclear reactor (10) in accordance with Claim 7 wherein said primary containment vessel (16) includes a wetwell (20) , and wherein said at least one ventilating pipe (28) extends between said wetwell (20) and said secondary containment vessel (16).

9. A nuclear reactor (10) in accordance with Claim 7 wherein said ventilating system (26) comprises one ventilating pipe (28) and one safety relief valve (30), said one safety relief valve (30) coupled to said one ventilating pipe (28).

10. A nuclear reactor (10) in accordance with Claim 7 wherein said ventilating system (26) comprises at least two ventilating pipes (28), each said ventilating pipe (28) including one safety relief valve (30) coupled thereto.

11. A nuclear reactor (10) in accordance with Claim 7 wherein said at least one safety relief valve (30) comprises at least one pressure set point.

12. A nuclear reactor (10) in accordance with Claim 11 wherein said primary containment vessel (16) comprises a primary containment vessel pressure capability, and wherein said at least one pressure set point is lower than said primary containment vessel pressure capability.

13. A method for retaining steam leakage from a primary containment vessel (16) of a nuclear reactor (10) using a ventilating system (26), the ventilating system (26) including at least one ventilating pipe (28) and at least one safety relief valve (30), the primary containment vessel (16) positioned within a secondary containment vessel (24), said method comprising the steps of:
extending at least one of the ventilating pipes (28) between the primary containment vessel (16) and the secondary containment vessel (24); and
coupling one of the safety relief valves (30) to each ventilating pipe (28).

14. A method in accordance with Claim 13 wherein extending at least one of the ventilating pipes (28) between the primary containment vessel (16) and the secondary containment vessel (24) comprises the step of extending each of the ventilating pipes (28) between the primary containment vessel (16) and the secondary containment vessel (24).

15. A method in accordance with Claim 13 wherein the primary containment vessel (16) includes a wetwell (20), and wherein extending at least one of the ventilating pipes (28) between the primary containment vessel (16) and the secondary containment vessel (24) comprises the step of extending at least one of the ventilating pipes (28) between the wetwell (20) and the primary containment vessel (16).

16. A method in accordance with Claim 13 wherein the safety relief valve (30) has a first pressure set point, a second, lower pressure set point, and is configured to move between a first position, where the safety relief valve (30) prevents steam from flowing through the ventilating pipe (28), and a second position, where the safety relief valve (30) enables steam to flow through the ventilating pipe (28), and wherein said method further comprises the step of positioning the safety relief valve (30) in the first position when a pressure within the primary containment vessel (16) is lower than the first pressure set point.

17. A method in accordance with Claim 16 further comprising the step of positioning the safety relief valve (30) in the second position when the pressure within the primary containment vessel (16) exceeds the first pressure set point.

18. A method in accordance with Claim 17 further comprising the step of positioning the safety relief valve (30) in the first position when the pressure within the primary containment vessel (16) reduces to the second, lower pressure set point.

19. A method in accordance with Claim 16 wherein the primary containment vessel (16) includes a primary containment vessel pressure capability, and wherein the first pressure set point is lower than the primary containment vessel pressure capability.
